Europäisches Patentamt

European Patent Office

Office européen des brevets

(19)

(11) EP 0 924 533 A1

(12) ## DEMANDE DE BREVET EUROPEEN

(43) Date de publication:
23.06.1999 Bulletin 1999/25

(51) Int Cl.⁶: **G01S 7/481**, G01S 17/08, G01S 7/483, G01S 7/484

(21) Numéro de dépôt: 98403163.3

(22) Date de dépôt: 15.12.1998

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **19.12.1997 FR 9716159**

(71) Demandeur: **COMMISSARIAT A L'ENERGIE ATOMIQUE**
**75015 Paris (FR)**

(72) Inventeur: **Besesty, Pascal**
**38410 Vaulnaveys Le Haut (FR)**

(74) Mandataire: **Dubois-Chabert, Guy**
**c/o BREVATOME**
**25, rue de Ponthieu**
**75008 Paris (FR)**

(54) **Dispositif de télémetrie impulsionnelle à détection intracavite**

(57)    L'invention a pour objet un dispositif de télémétrie laser, à détection cohérente, comportant :

- un microlaser (10) à déclenchement passif avec une première (16) et une deuxième (18) faces d'émission opposées, aptes à émettre respectivement un premier (4) et un deuxième (32) faisceaux,
- des moyens (23) pour transmettre le premier faisceau (4) émis par le microlaser en direction d'une cible (2), pour recevoir un signal de mesure en provenance de la cible et pour transmettre ce signal de mesure vers le milieu actif laser,
- des moyens (28) de détection, pour détecter un signal résultant de l'interférence entre l'oscillation laser dans la cavité et le signal de mesure.

FIG. 1

# Description

Domaine technique et art antérieur

L'invention concerne un dispositif de mesure de distance encore appelé télémètre laser.

Dans le domaine de la mesure de distance plusieurs techniques peuvent être employées :

- la technique de mesure de phase : la puissance optique du laser est modulée en amplitude, et le déphasage occasionné par le trajet aller-retour est directement lié à la distance. Cette technique est couramment utilisée dans des télémètres avec des portées inférieures à 100 mètres, car un des principaux inconvénients est la gestion des ambiguïtés dues à la périodicité de la modulation. La mesure ne peut pas dépasser la demi-période de la fréquence de modulation. On utilise fréquemment plusieurs fréquences de modulation pour enlever ces ambiguïtés, mais le dispositif devient alors très compliqué,

- la technique de mesure du temps de vol : dans ce cas, on utilise un émetteur laser impulsionnel, qui permet d'adapter le taux de répétition des impulsions du laser en fonction de la distance, et ainsi de s'affranchir de l'inconvénient exposé dans un cas de la mesure de phase. Ces télémètres sont fréquemment utilisés pour des mesures comprises entre 1 mètre et plusieurs kilomètres, en fonction de la puissance de l'émetteur.

La présente invention met en oeuvre cette deuxième technique.

La distance d est alors donnée par la mesure du trajet aller et retour de l'impulsion laser :

$$d = 1/2.c.t$$

où "c" est la vitesse de la lumière.

La précision de la mesure est donnée par :

$$\delta x = c.Tr/SNR$$

où Tr est le temps de montée de l'impulsion, c la vitesse de la lumière et SNR le rapport signal sur bruit.

La relation suivante exprime la relation entre la puissance $P_r$, reçue sur le détecteur, et la puissance $P_e$, émise par l'émetteur laser.

$$P_r = P_e \frac{a}{\pi d^2} T$$

où a est la surface de l'optique de réception, d est la distance séparant l'émetteur de la cible et T représente le coefficient de transmission (optique et atmosphérique) .

Pour faire une mesure correcte on cherche à disposer d'un signal détectable, ce qui correspond à une limitation de la technique. Pour améliorer la portée du télémètre, plusieurs solutions peuvent être envisagées :

1) Augmenter la puissance de l'émetteur, ce qui n'est pas toujours possible si l'on veut respecter la sécurité oculaire.

2) Diminuer le bruit du détecteur, ce qui n'est pas toujours réalisable, notamment si le détecteur est déjà un détecteur à faible bruit.

3) Réaliser un filtrage électronique sur le signal, en sortie du détecteur, pour améliorer le rapport signal sur bruit. Ceci ralentit la rapidité d'acquisition, car il faut alors utiliser des techniques d'accumulation ou de corrélation demandant beaucoup de mesures pour extraire le signal du bruit

$$\left( \frac{1}{\sqrt{n}} \right).$$

4) Utiliser une technique d'amplification optique intra-cavitaire. Cette technique permet d'améliorer le rapport signal sur bruit du signal grâce à l'utilisation du gain de la cavité du laser. L'article de A. Alping et al., intitulé "Picosecond semiconductor laser radar with optical amplifier", paru dans Electronics Letters, February 14, 1985, vol. 21, n° 4, pp. 186-7, décrit une méthode utilisant une diode laser, qui joue le rôle d'émetteur et de récepteur. La ré-injection du faisceau réémis par la cible dans la cavité de la diode laser permet une amplification optique de 17 dB. Le dispositif décrit dans cette publication utilise une diode laser comme émetteur, ce qui limite la portée du dispositif du fait de la faible longueur de cohérence des composants (quelques mètres) . D'autre part, les diodes lasers sent sensibles au "feedback", ce qui limite la dynamique du signal qui peut être réinjecté dans la cavité avant d'occasionner des sauts de mode. Une demande de brevet FR-96 09227 présente l'amplification intracavitaire dans un micro laser YAG pour effectuer une mesure de vitesse. Dans ce cas, on utilise un microlaser continu qui permet d'améliorer la portée du capteur grâce à une meilleure longueur de cohérence de la source laser (quelques centaines de mètres). Par contre, la portée de mesure du dispositif est Limitée par la sécurité oculaire.

Exposé de l'invention

L'invention a pour objet un dispositif de télémétrie du type à détection cohérente, comportant :

- un microlaser à déclenchement passif avec une première et une deuxième faces d'émission opposées, aptes à émettre respectivement un premier et un deuxième faisceaux,

- des moyens pour transmettre le premier faisceau émis par le microlaser en direction d'une cible, pour recevoir un signal de mesure en provenance de la cible et pour transmettre ce signal de mesure vers le milieu actif laser,

- des moyens de détection pour détecter un signal correspondant au premier faisceau émis et un signal résultant de l'interférence entre l'oscillation laser dans la cavité et le signal de mesure.

Ce dispositif utilise une propriété des microlasers, qui lui permet d'améliorer le rapport signal sur bruit de la détection, grâce à un phénomène d'amplification optique intra-cavité, et ainsi d'accroître la portée du télémètre (avec un gain d'un facteur 5 environ). La compacité du télémètre laser est également améliorée.

L'amplification résulte de l'interférence, dans la cavité du microlaser, entre le signal de mesure et le signal laser encore présent dans la cavité au moment de la réception du signal de mesure.

On peut donc utiliser, comme moyen de détection, une diode PIN à la place d'une diode à avalanche, ce qui entraîne une réduction d'un facteur 10 sur le coût de la détection.

Le principe de la mesure à l'aide d'un dispositif selon l'invention est celui de la mesure du temps de vol, c'est-à-dire de la mesure du trajet aller et retour d'une impulsion lumineuse rétrodiffusée par la cible.

Le microlaser à déclenchement passif est utilisé comme émetteur laser et comme récepteur. La réception se fait lorsque l'absorbant saturable est dans un état de forte transmission, c'est-à-dire lorsque l'excitation est forte. Ceci se produit pendant quelques $\mu s$ (par exemple, environ $4\mu s$) dans un microlaser à déclenchement passif, lorsqu'il a émis une impulsion. Donc, pendant quelques microsecondes, le flux rétrodiffusé par la cible peut être réinjecté dans la cavité du microlaser. L'interférence entre le flux du faisceau d'émission et le flux renvoyé par la cible a lieu dans le microlaser. Une détection autodyne est donc effectuée. Ce principe ne nécessite qu'une quantité très faible de lumière et permet donc de fonctionner avec des faisceaux de faible intensité.

Le microlaser passif est utilisé comme un émetteur laser ; il est, dans le cas de la détection autodyne, utilisé comme un émetteur, mais aussi comme circuit optique de réception, avec une fonction simplification.

De plus, pour réaliser une détection avec un minimum de bruit, il est nécessaire, dans les dispositifs de l'art antérieur, d'utiliser un filtre interférentiel. Dans le cas de la présente invention, un tel filtre n'est pas nécessaire car le laser réalise cette onction (la lumière seule du microlaser rentre de nouveau dans la cavité).

Le dispositif selon l'invention permet en outre, du fait de l'utilisation d'u microlaser impulsionnel en détection autodyne, d'avoir des distances de mesure, ou portées, plus importantes, tout en restant en sécurité oculaire (gain d'un facteur 5 sur la portée). Il permet également d'avoir une optique de réception plus compacte et donc de gagner en taille sur les dispositifs optiques de télémétrie.

De plus, l'émission et la réception étant coaxiales, on supprime la zone "morte" causée par la séparation des axes d'émission et de réception.

Brève description des figures

De toute façon, les caractéristiques et avantages de l'invention apparaîtront mieux à la lumière de la description qui va suivre. Cette description porte sur les exemples de réalisation, donnes à titre explicatif et non limitatif, en se référant à des dessins annexés sur lesquels :

- La figure 1 représente un mode de réalisation d'un dispositif de télémétrie selon l'invention.

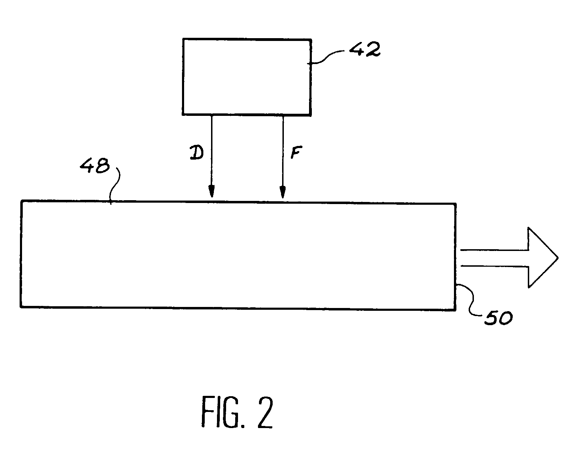

- La figure 2 représente schématiquement un dispositif de traitement des signaux d'un télémètre selon l'invention.

Description détaillée de modes de réalisation de l'invention

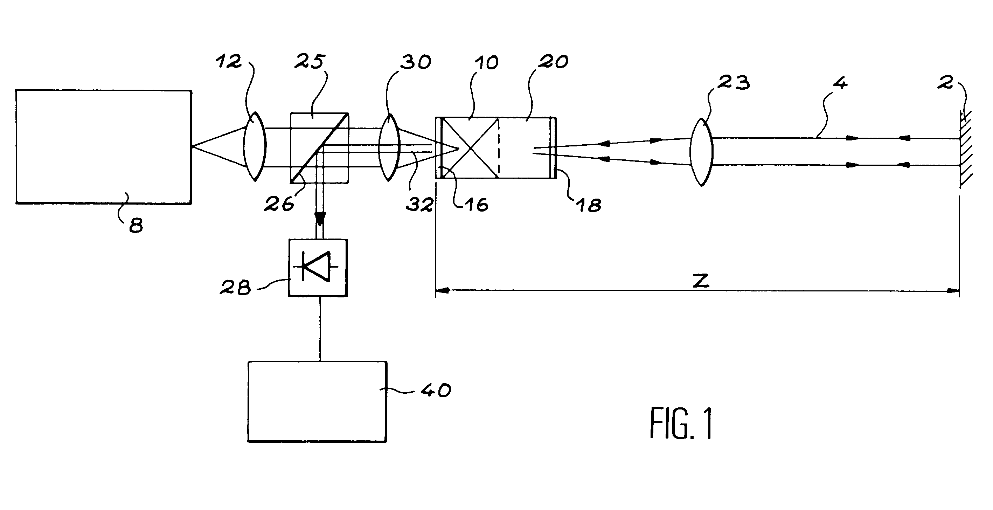

Un premier mode de réalisation de l'invention va être donné en liaison avec la figure 1.

Celle-ci représente un dispositif de télémétrie, qui permet de mesurer la distance Z entre une cible 2 et le dispositif. La cible intercepte un faisceau laser pulsé 4.

Le dispositif comporte en fait deux sous-ensembles. Le premier sous-ensemble constitue la partie émission, le second sous-ensemble constitue la partie réception.

Le sous-ensemble de l'émission comprend :

- un moyen optique 8 (par exemple une diode laser de type III-V) pour réaliser le pompage d'un matériau laser amplificateur 10,

- un ensemble 12, 30 constituant une optique de collimation et de focalisation du faisceau émis par les moyens de pompage 8 ; cet ensemble 12, 30 peut être constitué de lentilles GRIN qui assurent les fonctions de collimation et de focalisation,

- le milieu amplificateur 10 du microlaser, inséré dans une cavité Fabry-Pérot délimité par un miroir d'entrée 16 (de réflectivité $r_1$ à la longueur d'onde $\lambda_L$ du microlaser) et un miroir de sortie 18 (de réflectivité $r_2$ à $\lambda_L$), la distance entre les deux miroirs étant notée L,

- des moyens optiques 23 de collimation du faisceau laser émis,

- des moyens 20 de déclenchement passif de la cavité microlaser. Ces moyens comportent un élément absorbant saturable ou une couche mince d'absorbant saturable du type de celles décrites dans le document EP-653 824. Un absorbant saturable présente une transmission non linéaire qu'utilise la présente invention lors de la réception. A faible excitation la transmission est faible et l'absorbant saturable introduit des pertes dans la cavité laser, empêchant l'émission laser. A forte excitation, au-delà d'un seuil, la transmission augmente brutalement et toute l'énergie stockée dans le milieu actif pendant environ une centaine de μsec (la durée de vie de l'ion actif) produit une impulsion très brève (<1ns) de forte puissance crête (>1kW). Après l'émission de l'impulsion laser, l'absorbant devient de nouveau opaque, le stockage d'énergie recommence jusqu'au seuil de déclenchement et ainsi de suite. Ce mécanisme de déclenchement ne nécessite aucune intervention extérieure.

Selon un exemple, l'absorbant saturable est composé d'un matériau de base, identique à celui du milieu actif solide 10 du microlaser, et dopé avec des ions $Cr^{4+}$ (pour un laser à 1,06 μm).

- des moyens 25 (par exemple, un cube séparateur de faisceau) pour prélever un faisceau de référence sur le faisceau émis 32, et l'envoyer vers des moyens 28 de photodétection.

De préférence, les moyens de pompage 8 sont constitués par une diode laser. Les moyens optiques (lentilles) 12, 30 peuvent être ou bien des lentilles simples, ou bien des lentilles de type GRIN, ou toute autre association de composants optiques, permettant de focaliser le faisceau de pompage au sein du milieu actif laser 10.

Le milieu amplificateur laser peut être par exemple constitué d'un matériau de base choisi parmi $Y_3Al_5O_{12}$, $LaMgA_{11}O_{19}$, $YVO_4$, $Y_2SiO_5$, $YLiF_4$ ou $GdVO_4$ et être dopé avec des ions de néodyme (Nd, pour une émission de 1,06 μm), d'erbium (Er, pour une émission autour de 1,5 μm), de thulium (Tm, pour une émission autour de 2 μm), d'holmium (Ho, pour une émission autour de 2 μm), ou avec un codopage d'ions erbium et ytterbium (Er+Yb, pour une émission autour de 1,5 μm), ou avec un codopage de thulium et d'holmium (Tm+Ho, pour une émission autour de 2 μm).

Les microlasers sont décrits par ailleurs dans l'article de J.J. Zayhowski, paru dans The Lincoln Laboratory Journal, vol. 3, p. 427 (1990).

Le milieu amplificateur étant celui d'un microlaser, un tel dispositif permet d'émettre un faisceau de faible divergence (quelques milliradians), très circulaire, monomode ($TEM_{00}$) et permet, de plus, l'emploi d'une optique simple pour le collimater (ce qui est impossible avec une diode laser). On utilise alors une optique fixe pour rendre le faisceau parallèle.

La portée d'un tel dispositif laser est beaucoup plus importante que celle des dispositifs existants, notamment ceux mettant en oeuvre une diode, pour une puissance d'émission laser inférieure ou égale au seuil de sécurité oculaire déterminé par les normes en vigueur.

Le sous-ensemble de réception comprend :

- les moyens optiques 23, qui permettent la réception de la lumière laser réfléchie par l'objet 2,
- les moyens 25 de recombinaison du faisceau de référence et du faisceau de mesure,
- un ensemble de détection comportant par exemple un détecteur photoélectrique 28.

L'élément séparateur 25 est situé entre la source de pompage 8 et le microlaser 10. Dans le cas d'un cube séparateur, celui-ci est de préférence du type dichroïque en ce sens qu'il laisse passer sans modification notoire le faisceau de pompe à la longueur d'onde λ mais réfléchi de façon efficace le faisceau 32 (à la longueur d'onde λ) vers les moyens de détection 28. Par un traitement diélectrique adéquat de l'interface constituée par la face diagonale 26 du cube 25 il est possible de réaliser la fonction de séparation des faisceaux.

Le microlaser émet un faisceau laser 4 en direction de la cible 2 ainsi qu'un faisceau laser 32 en direction des moyens séparateurs 25 et des moyens de détection 28. Ainsi, lorsque le pompage optique fourni par les moyens de pompage 8 permet de dépasser le seuil laser, le microlaser émet deux faisceaux lasers. Le seuil de pompage pour l'émission des faisceaux dépend non seulement du matériau amplificateur 10 mais aussi des miroirs 16 et 18.

Les faisceaux du microlaser sont respectivement émis par les première et deuxième faces 16, 18 du laser et sont désignés par premier 4 et deuxième 32 faisceaux. Les premier et deuxième faisceaux 4, 32, colinéaires, sont émis dans des sens opposés.

Les moyens 23 de focalisation et de collimation permettent de focaliser la lumière réfléchie, ou diffusée, par la cible 2, dans le microlaser, qui constitue également un récepteur et un amplificateur pour la lumière (diffusée ou réfléchie) réémise par la cible (signal de mesure). Les moyens 28 permettent de détecter un signal résultant de l'interférence, dans la cavité microlaser, entre l'oscillation laser modulée et le signal de mesure.

Dans le cas où l'élément séparateur 25 est un cube, la face inclinée du cube 25, qui permet de diriger le faisceau de référence en direction de l'élément de détection 28, est sensiblement transparente pour la longueur d'onde $λ_P$ (par exemple, environ 808 nm) de la lumière de pompage et réfléchissante pour la longueur d'onde λ émise par le microlaser (par exemple à 1064 nm).

Dans ce dispositif, la lumière réfléchie ou diffusée par la cible n'atteint par directement les moyens de détection 28. Cette lumière est reçue par le microlaser et est arrêtée pour l'essentiel par le miroir 16 formant la deuxième face du microlaser. Les moyens de détection 28 sont, ainsi, dans une large mesure, isolés optiquement de la lumière provenant de la cible. Réciproquement, le microlaser est peu perturbé par la lumière diffusée et réfléchie sur le détecteur.

En fait, ce montage permet d'éviter les problèmes de diaphonie entre l'émission et la réception. Ainsi, une partie du signal provenant de la cible ne peut se réfléchir à la surface d'un miroir et, par autocollimation, venir se mélanger au signal de modulation détecté par les moyens de détection 28.

Le fonctionnement d'un dispositif selon l'invention est le suivant.

Un signal de départ D est fourni au dispositif de détection 28 lors du pompage du milieu laser 10 et de son déclenchement : ce signal correspond à l'émission du faisceau 32 et à sa réception par le dispositif 28.

Un signal de fin F est fourni au dispositif de détection 28 lors du retour du signal, rétrodiffusé par la cible 2. Plus précisément, une interférence a lieu dans la cavité microlaser entre le flux de photons du faisceau d'émission, qui oscille toujours en partie dans la cavité microlaser, et le flux de photons renvoyé par la cible 2 : c'est ce signal d'interférence qui est envoyé vers le détecteur 28, et à la réception duquel celui-ci fournit le signal F de fin.

La distance Z est donnée par :

$$z = \frac{1}{2} \, c\Delta t$$

où $\Delta t$ est la durée séparant les signaux D et F.

Par conséquent, on réalise une détection du signal en sortie du photodétecteur, qui permet de séparer le signal de départ D, correspondant à l'instant de départ de l'impulsion du laser, et le signal de fin F, correspondant au retour du signal rétrodiffusé. Cette séparation se fait simplement par un dispositif 42 de fenêtrage temporel, puisque le signal D est présent avant le signal F.

Les deux signaux ainsi séparés sont envoyés sur les entrées d'un circuit de chronométrie 48 qui fournit à l'utilisateur l'information 50 de distance correspondant à la durée de l'intervalle de temps entre D et F. Ce circuit est décrit par exemple dans la demande de brevet FR-2 725 279. On rappelle qu'un tel circuit comporte :

- une horloge qui délivre des impulsions avec une période T,
- un circuit numérique pour compter le nombre d'impulsions de la première horloge qui sont suivies par une période entière T et qui sont comprises entre le signal de début (D) et le signal de fin (F),
- un circuit analogique pour déterminer d'une part le temps $t_1$ séparant le signal (D) et le début de la première impulsion de la première horloge qui commence après (D) et d'autre part le temps $t_2$ séparant le signal de fin (F) de la fin de la dernière période de la première horloge qui s'achève avant (F), et apte à convertir les données analogiques obtenues en données numériques,
- un circuit de traitement, pour déterminer la durée de l'intervalle de temps à partir des données fournies par le circuit numérique et celles fournies par le circuit analogique préalablement converties en données numériques.

## Revendications

1. Dispositif de télémétrie du type à détection cohérente, comportant :

   - un microlaser (10) à déclenchement passif avec une première (16) et une deuxième (18) faces d'émission opposées, aptes à émettre respectivement un premier (4) et un deuxième (32) faisceaux,
   - des moyens (23) pour transmettre le premier faisceau (4) émis par le microlaser en direction d'une cible (2), pour recevoir un signal de mesure en provenance de la cible et pour transmettre ce signal de mesure vers le milieu actif laser,
   - des moyens (28) de détection, pour détecter un signal résultant de l'interférence, dans la cavité du microlaser, entre l'oscillation laser dans la cavité et le signal de mesure.

2. Dispositif selon la revendication 1, les moyens (28) de détection comportant un détecteur photoélectrique.

3. Dispositif selon la revendication 2, le détecteur photoélectrique comportant une photodiode de type PIN.

4. Dispositif selon l'une des revendications précédentes comportant en outre des moyens (8) de pompage optique du microlaser.

5. Dispositif selon l'une des revendications 1 à 4, comportant en outre des moyens (25) pour prélever un faisceau de référence (26) sur le second faisceau émis (32) et l'envoyer vers les moyens (28) de détection.

6. Dispositif selon l'une des revendications précédentes, comportant en outre des moyens (40) pour produire un signal de départ (D) correspondant au départ d'une impulsion microlaser et un signal de fin (F) correspondant au retour du signal de mesure en provenance de la cible.

**7.** Dispositif selon la revendication 6, comportant en outre des moyens (42, 48) pour fournir une information de distance correspondant à la durée de l'intervalle de temps entre le signal de départ (D) et le signal de fin (F).

FIG. 1

EP 0 924 533 A1

FIG. 2

**Office européen des brevets**

## RAPPORT DE RECHERCHE EUROPEENNE

Numéro de la demande

EP 98 40 3163

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | ALPING A., ANDERSSON P., ENG S. T.: "Picosecond semiconductor Laser Radar with Optical Amplifier" ELECTRONICS LETTERS, vol. 21, no. 4, 14 février 1985, pages 126-127, XP002077497 UK * le document en entier * | 1-3 | G01S7/481 G01S17/08 G01S7/483 G01S7/484 |
| A | NERIN P, PUGET P., BESESTY P., CHARTIER G.: "Self-mixing using a dual-polarization Nd:YAG microchip laser" ELECTRONICS LETTERS, vol. 33, no. 6, 13 mars 1997, pages 491-492, XP002077885 * le document en entier * | 1-5 | |
| A | GB 2 251 150 A (SECR DEFENCE) 24 juin 1992 * page 5, alinéa 4 * * revendications 1-5,7,8 * | 1-3 | |
| A | US 5 069 545 A (HINZ ALEXANDER) 3 décembre 1991 * abrégé * * figure 2 * | 1,2,5 | **DOMAINES TECHNIQUES RECHERCHES (Int.Cl.6)** G01S H01S |
| A,D | ZAYHOWSKI J J: "MICROCHIP LASERS" THE LINCOLN LABORATORY JOURNAL, vol. 3, no. 3, 1 janvier 1990, pages 427-445, XP000195589 * le document en entier * | 1,4 | |

-/--

Le présent rapport a été établi pour toutes les revendications

| Lieu de la recherche | Date d'achèvement de la recherche | Examinateur |
|---|---|---|
| LA HAYE | 19 mars 1999 | Ó Donnabháin, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Office européen
des brevets

**RAPPORT DE RECHERCHE EUROPEENNE**

Numéro de la demande

EP 98 40 3163

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | ZAYHOWSKI J J: "MICROCHIP LASERS" PROCEEDINGS OF THE CONFERENCE ON QUANTUM LASER SCIENCE, BALTIMORE, MAY 12 - 17, 1991,12 mai 1991, page 204 XP000253804 INSTITUTE OF ELECTRICAL AND ELECTRONICS ENGINEERS * le document en entier * | 1 | |
| A,P | EP 0 821 246 A (COMMISSARIAT ENERGIE ATOMIQUE) 28 janvier 1998 * abrégé * * figure 1 * | 1-4 | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 19 mars 1999 | Ó Donnabháin, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03 82 (P04C02)

**ANNEXE AU RAPPORT DE RECHERCHE EUROPEENNE**
**RELATIF A LA DEMANDE DE BREVET EUROPEEN NO.**          EP 98 40 3163

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-03-1999

| Document brevet cité au rapport de recherche | | Date de publication | Membre(s) de la famille de brevet(s) | | Date de publication |
|---|---|---|---|---|---|
| GB 2251150 | A | 24-06-1992 | AUCUN | | |
| US 5069545 | A | 03-12-1991 | DE | 3907042 A | 13-09-1990 |
| | | | CA | 2011511 A | 04-09-1990 |
| | | | DE | 59010745 D | 11-09-1997 |
| | | | EP | 0392172 A | 17-10-1990 |
| | | | JP | 2272382 A | 07-11-1990 |
| EP 0821246 | A | 28-01-1998 | FR | 2751755 A | 30-01-1998 |
| | | | JP | 10115681 A | 06-05-1998 |
| | | | US | 5825465 A | 20-10-1998 |

EPO FORM P0460

Pour tout renseignement concernant cette annexe : voir Journal Officiel de l'Office européen des brevets, No.12/82